# EUROPEAN PATENT APPLICATION

(11) **EP 1 903 597 A1**
(43) Date of publication of application: **26.03.2008**
(21) Application number: 07115885.1
(22) Date of filing: 07.09.2007
(51) Int. Cl.: H01J 61/067, H01J 61/30, H01J 65/04

(54) **Surface light source, method of driving the same, and backlight unit having the same**

(30) Priority: 19.09.2006 KR 20060090672
(71) Applicant: Samsung Corning Co., Ltd., Suwon-si, Gyeonggi-do 443-732 (KR)
(72) Inventor: Ban, Seok Mo, Gyeonggi-do 472-732 (KR); Lee, Ki Yeon, Gyeonggi-do 472-732 (KR); Jung, Kyeong Taek, Gyeonggi-do 472-732 (KR); Youn, Hyung Bin, Gyeonggi-do 472-732 (KR); Lee, Keun Seok, Gyeonggi-do 472-732 (KR); Lee, Dong Hee, Gyeonggi-do 472-732 (KR); Kee, Won Do, Gyeonggi-do 472-732 (KR); Jee, Yong Keun, Gyeonggi-do 472-732 (KR)
(74) Representative: Hengelhaupt, Jürgen

(57) **Abstract**

A surface light source (200) includes a plate type light source body having a sealed discharging space (240) formed therein, a plate type electrode unit (250) entirely formed on at least one surface of the light source body, and a multiple voltage applying unit to partition the electrode unit into a plurality of regions and to apply voltages to the respective regions. The electrode unit is partitioned into plural regions and voltages are applied to the regions so that brightness of a surface light source can be partially controlled and a local dimming for a surface light source is realized.

## Description

### BACKGROUND OF THE INVENTION

### 1. Technical Field

The present invention relates to a surface light source, a method of driving the same, and a backlight unit having the same, and more particularly, to a surface light source capable of partially controlling brightness.

### 2. Discussion of Related Art

A liquid crystal display displays an image, using the electrical and optical properties of liquid crystal. The liquid crystal display is widely employed in portable computers, communication devices, liquid crystal television receivers, aerospace industry, and the like because volume and weight are smaller and lighter than those of a cathode ray tube (CRT).

The liquid crystal display includes a controlling unit to control a liquid crystal panel and a backlight source to illuminate the liquid crystal panel. The controlling unit includes pixel electrodes arranged on a first substrate, a common electrode disposed on a second substrate, and the liquid crystal panel disposed between the pixel electrodes and the common electrode. The number of the pixel electrodes is plural to achieve a resolution of the liquid crystal display, and the common electrode is single and faces the pixel electrodes. Thin film transistors (TFT) are connected to the pixel electrode to apply voltages of different levels thereto and a reference voltage of the same level is applied to the common electrode. The pixel electrodes and the common electrode are made of a transparent conductive material.

The light illuminated by the backlight source passes through the pixel electrodes, the liquid crystal panel, and the common electrode sequentially. In this case, the quality of an image transmitted through the liquid crystal panel significantly depends on brightness of and brightness uniformity of the backlight source. Generally, as the brightness and the uniformity of brightness are high, the image quality becomes high.

The backlight source of a conventional liquid crystal display chiefly employs a bar-shaped cold cathode fluorescent lamp (CCFL) or a dot-shaped light emitting diode (LED). The cold cathode fluorescent lamp has high brightness and long lifespan and generates heat less than that of an incandescent lamp. On the other hand, The LED has high power consumption, but has excellent brightness. However, the CCFL and the LED are disadvantageous of inferior uniformity of the brightness. Thus, in order to increase the uniformity of brightness, the backlight source employing the CCFL or LED as a light source requires optical members, such as a light guide panel (LGP), a diffusion member, and a prism sheet. Due to the optical members, the liquid crystal display employing the aforementioned CCFL or LED significantly increases in size and in weigh.

A flat fluorescent lamp (FFL) has been proposed as the backlight source of the liquid crystal display.

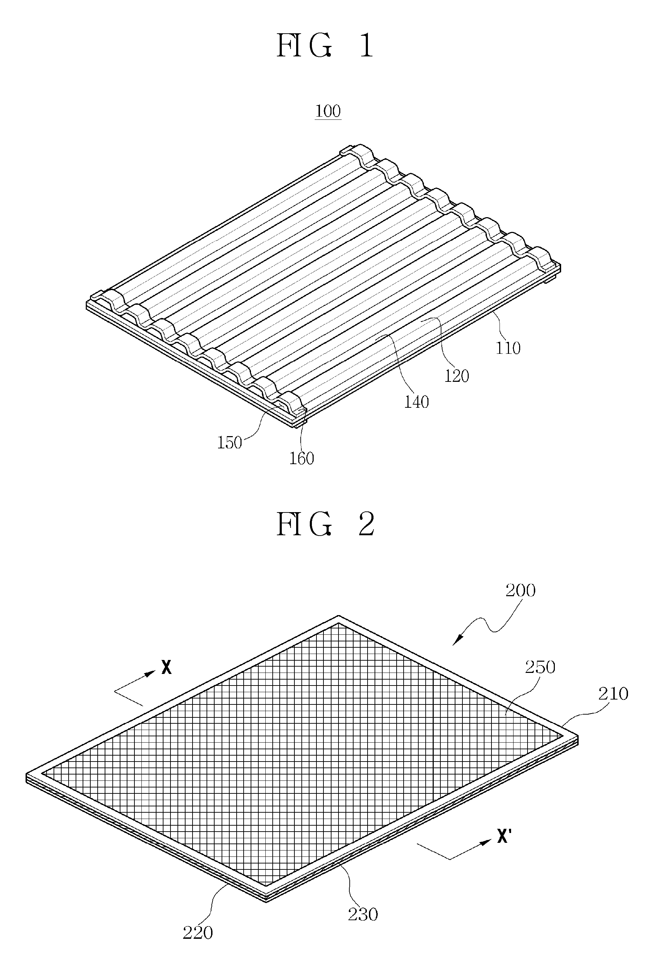

Referring to FIG. 1, a conventional surface light source 100 includes a light source body 110 and electrodes 160 provided at the outer surface of both lateral edges of the light source body 110. The light source body 110 includes first and second substrates facing each other by a predetermined distance. A plurality of partitions 140 are disposed between the first and second substrates to partition a space defined by the first and second substrates into plural discharging channels 120. A sealing member (not shown) is disposed at the rims of the first and second substrates to isolate the discharging channels 120 from exterior. A discharge gas is injected into discharging spaces 150 in the discharging channels.

In order to drive the surface light source to be discharged, an electrode is coated on the first and second substrates or one of the first and second substrates to have the same area per a discharging channel in the form of a minus-shaped band or an island electrode. Thus, all the channels discharge uniformly when the surface light source is driven by an inverter.

The surface light source maintains a predetermined degree of brightness during the driving. Although dimming technology has been proposed to vary brightness of a surface light source depending on screen information of a liquid crystal display, partially controlled brightness in a surface light source is not provided yet.

In order to improve image quality of the liquid crystal display and to implement more clean and natural image, the technology of partially controlling brightness of the surface light source must be required.

### SUMMARY OF THE INVENTION

Therefore, the present invention is directed to provide a new surface light source suitable for a large-sized liquid crystal display.

Another object of the present invention is to provide a surface light source and a backlight unit capable of partially controlling brightness.

In accordance with an aspect of the present invention, the present invention provides a surface light source comprising a plate type light source body having a sealed discharging space formed therein, a plate type electrode unit entirely formed on at least one surface of the light source body, and a multiple voltage applying unit to partition the electrode unit into a plurality of regions and to apply voltages to the respective regions.

The electrode unit may comprise electrode patterns spaced apart from each other. In a case of the electrode units being formed on the upper side and the lower side of the light source body, each electrode unit may comprise electrode patterns formed in different directions.

The present invention provides a driving method of a surface light source comprising forming a plate type electrode unit having a property of transmitting visible rays therethrough on a plate type light source body having a sealed discharging space, and partitioning the electrode unit into a plurality of regions and applying voltages to the respective regions.

The present invention provides a backlight unit comprising a surface light source, a case and an inverter. The surface light source comprises a plate type light source body having a sealed discharging space formed therein, a plate type electrode unit entirely formed on at least one surface of the light source body, and a multiple voltage applying unit to partition the electrode unit into a plurality of regions and to apply voltages to the respective regions. The case accommodates the surface light source and the inverter applies voltages to first and second surface electrodes.

According to the surface light source and the backlight unit according to the present invention, the electrode unit is partitioned into plural regions and voltages are applied to respective regions so that brightness can be partially controlled. Due to this partially controlling brightness, a local dimming of the surface light source depending on screen information of a liquid crystal display is enabled, and clearer and natural image can be guaranteed.

### BRIEF DESCRIPTION OF THE DRAWINGS

The above and other features and advantages of the present invention will become more apparent to those of ordinary skill in the art by describing in detail preferred embodiments thereof with reference to the attached drawings in which:
FIG. 1 is a perspective view illustrating an example of a surface light source;
FIG. 2 is a perspective view illustrating a surface light source according to an embodiment of the present invention;
FIG. 3 is a side view illustrating the surface light source according to the embodiment of the present invention;
FIG. 4 is a sectional view taken along the line X-X' in FIG. 2;
FIG. 5 is an enlarged view of a portion A in FIG. 4;
FIG. 6 is a sectional view illustrating a multi-layer electrode unit according to an embodiment of the present invention;
FIGS. 7 to 9 are plan views illustrating various examples of electrode patterns of the electrode unit according to the embodiment of the present invention;
FIG. 10 is a plan view illustrating the electrode unit vertically partitioned and driven with respect to a long side of the surface light source;
FIG. 11 is a plan view illustrating the electrode unit horizontally partitioned and driven with respect to the long side of the surface light source;
FIG. 12 is a perspective view illustrating the electrode unit attached to the upper side and the lower side of the surface light source;
FIG. 13 is a schematic view illustrating the surface light source whose brightness is partially controlled due to the partial driving of the electrode unit;
FIGS. 14 and 15 are plan views illustrating an electrode unit partially driven according to another embodiment of the present invention;
FIG. 16 is a schematic view illustrating the surface light source whose brightness is partially controlled due to the partial driving of the electrode unit; and
FIG. 17 is an exploded perspective view illustrating a backlight unit including the surface light source according to the embodiment of the present invention.

### DETAILED DESCRIPTION OF THE INVENTION

The present invention will now be described more fully hereinafter with reference to the accompanying drawings, in which preferred embodiments of the invention are shown.

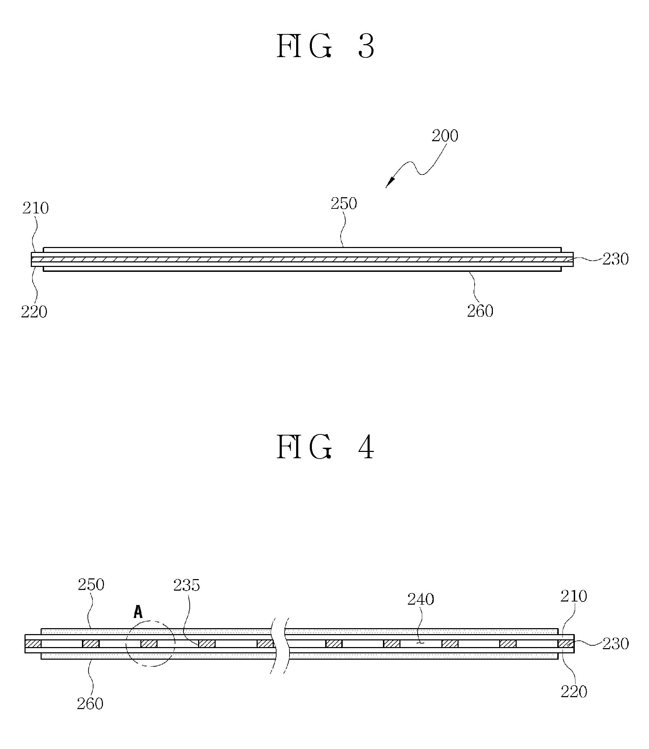

FIG. 2 is a perspective view illustrating a surface light source 200 according to an embodiment of the present invention, and FIG. 3 is a side view of the surface light source 200.

The surface light source 200 includes a plate type first substrate 210 and a same type second substrate 220. The first substrate 210 and the second substrate 220 are preferably made of transparent thin glass substrate, and have no restriction for thickness, but may have a thickness of about 1 mm to 2 mm, preferably, less than 1 mm.

A fluorescent layer is coated on the inner sides of the first and second substrates 210 and 220, and a reflective layer may be further formed on any one of the first and second substrates 210 and 220. The first substrate 210 and the second substrate 220 face each other by a predetermined distance and a sealing member 230 such as frit is inserted between edges of the substrates 210 and 220 to form a sealed space. Otherwise, the first substrate 210 and the second substrate 220 may be directly welded to each other by a heating device such as laser to form the light source body.

The surface light source of the present invention can be implemented by a thin structure with very thin thickness. The light source body formed by the first substrate, the second substrate, and the sealing member includes a single open-structured inner discharging space. Moreover, since mercury-excluded gas as a discharge gas injected into the discharging space can be used, the light source body can be applied to an environmentally friendly product.

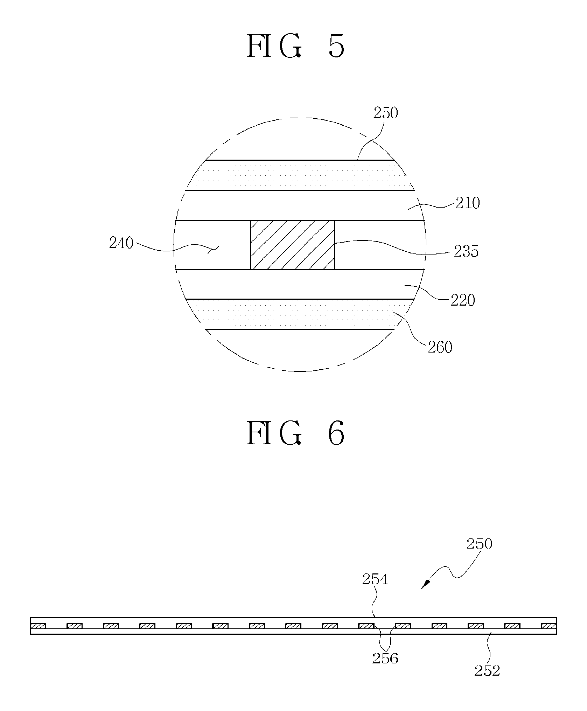

The surface light source according to the embodiment of the present invention includes large-sized plate type electrodes formed on the outer surfaces of the light source body formed by the first and second substrates 210 and 220. FIG. 4 is a sectional view taken along the line X-X' in FIG. 2, and FIG. 5 is an enlarged view of a portion A in FIG. 4. As illustrated, a first surface electrode 250 and a second surface electrode 260 are formed on the outer surfaces of the first and second substrates 210 and 220, respectively. The first and second surface electrodes 250 and 260 are plate type surface electrodes to substantially cover overall area of the substrates.

At least one of the first and second surface electrodes 250 and 260 has preferably an open ratio of 60 % or higher, of exposing a substrate such that a light transmission of light beam emitted from the light source body due to the discharging is increased.

The first substrate 210 and the second substrate 220 are plate type substrates and the inner space defined by the first and second substrates 210 and 220 and the sealing member 230 is not an individual discharging space partitioned by the partition as the conventional surface light source, but is a single open-structured discharging space 240. The distance between the first and second substrates 210 and 220 is very short in comparison to the area of the substrates 210 and 220 and the inner space is the open-structure so that vacuum ventilation and the injection of the discharging gas are very easily performed. Moreover, gas other than mercury as the discharging gas, such as xenon, argon, neon, and other inactive gas, or gas mixture thereof can be used to form the surface light source.

A vertical height of the discharging space 240 defined between the first and second substrates 210 and 220 can be determined by a spacer 235. The number of the spacers 235 and the interval between the spacers 235 may be determined within a range where the brightness property of light beam emitted from the surface light source is not deteriorated. Otherwise, a characteristic of the spacer may be artificially added, by molding certain parts of an upper substrate. Otherwise, the height of the discharge space 240 may be defined by protrusions (not shown) formed integrally with the inner surface of the first substrate 210 or second substrate 220. Since the discharging space is not partitioned by a partition in the surface light source according to the embodiment of the present invention, brightness and brightness uniformity of the light beam emitted from the front side of the substrates 210 and 220 are excellent.

In the surface light source according to the embodiment of the present invention, the first surface electrode 250 and the second surface electrode 260 may employ transparent electrodes such as ITO or electrodes with predetermined patterns. FIG. 6 is a sectional view illustrating a multi-layer electrode unit according to the embodiment of the present invention. As illustrated, the electrode unit has a multi-layer structure including a lower base layer 252, an electrode pattern 256 formed on the base layer 252, and a protective layer 254 formed on the base layer 252 and the electrode pattern 256. The base layer 252 and the protective layer 254 preferably have transparency with respect to visible rays.

In a case of an electrode unit including only the electrode pattern, the electrode unit is difficult to be bonded to a glass substrate and has inferior durability. However, the multi-layer structured electrode unit is easily bonded to the glass substrate, the electrode pattern has a sufficient durability, and various electrode patterns can be formed.

The base layer 252 is made of a material capable of resisting thermal shock such as transparent polymer, and the electrodes may be made of copper, silver, gold, aluminum, nickel, chrome, carbon or polymer based material with excellent conductivity, and mixture thereof. The protective layer 254 is made of transparent polymer material capable of resisting thermal shock.

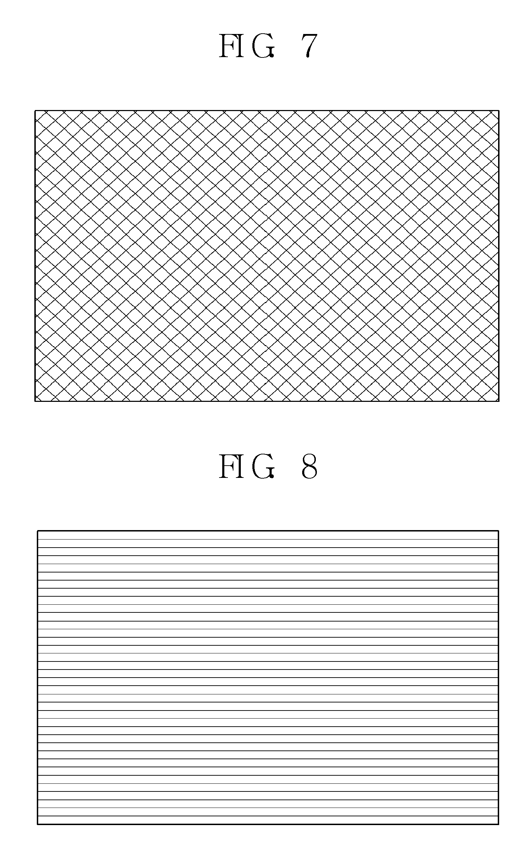

Various electrode patterns may be used in the plate type electrode unit employed in the surface light source according to the embodiment of the present invention. For example, a net type electrode pattern as illustrated in FIG. 7 or a stripe type pattern as illustrated in FIGS. 8 and 9 may be used. Different from those illustrated in the drawings, circular, oval, or polygonal regular patterns may be used. The first surface electrode 250 formed on the first substrate 210 and the second surface electrode 260 formed on the second substrate 220 may have different electrode patterns in shape, thereby changing the discharge characteristic of the surface light source.

The electrode patterns may be formed such that a pitch between the patterns maintains tens micro-meters to hundreds micro-meters.

In the plate type electrode unit, the electrode patterns may be grouped to individually apply voltages to respective groups. As such, the electrode unit is partitioned into a plurality of regions and voltages are applied to the respective regions so that the brightness can be partially controlled.

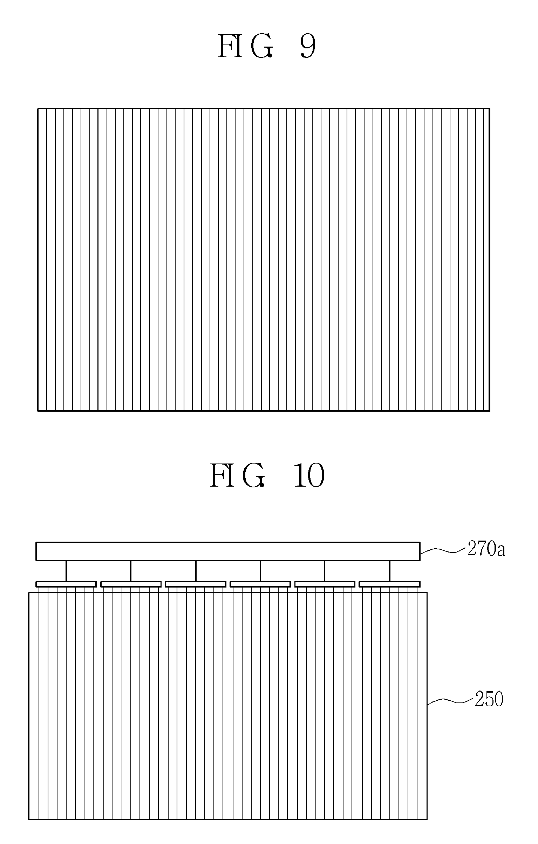

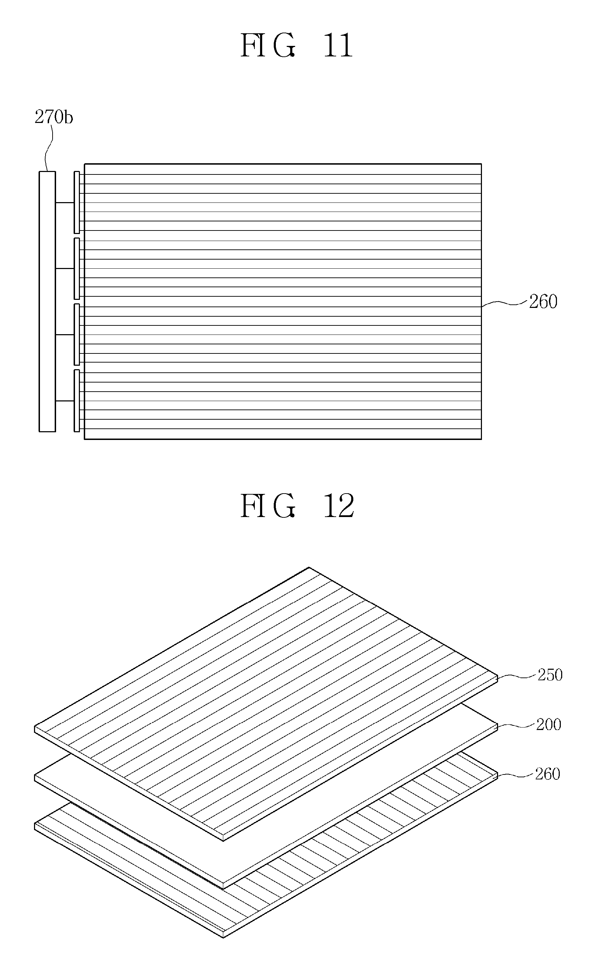

FIGS. 10 and 11 schematically illustrate multiple divisional driving of the electrode unit of the surface light source according to the embodiment of the present invention. As illustrated in FIG. 10, the electrode pattern of the first surface electrode (or the upper electrode) 250 is partitioned into predetermined regions and voltages are individually applied to the respective regions. A multiple voltage applying unit 270a can apply different voltages to the respective regions of the electrode pattern. As illustrated in FIG. 11, the electrode pattern of the second surface electrode (or the lower electrode) 260 is partitioned into predetermined regions and voltages are individually applied to the respective regions. FIG. 10 illustrates an example of partitioning the electrode unit with respect to the long side of the surface light source in the vertical direction to drive the electrode unit and FIG. 11 illustrates an example of partitioning the electrode unit with respect to the long side of the surface light source in the horizontal direction to drive the electrode unit.

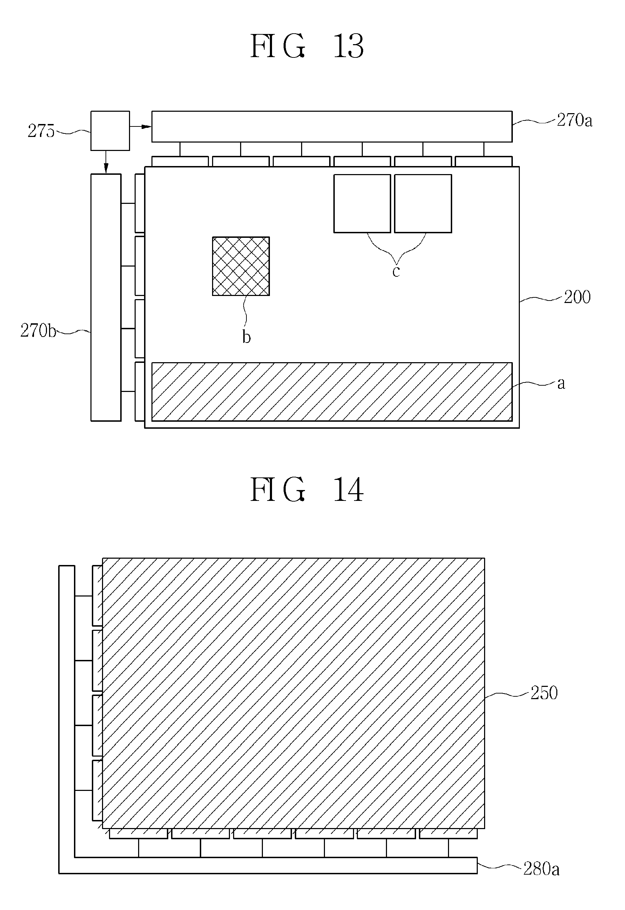

As illustrated in FIG. 12, when electrode units have the electrode patterns formed on the upper side and the lower side of the surface light source in different directions, the partial control of brightness may be more easily performed. FIG. 13 illustrates that multiple voltage applying units 270a and 270b partially drive the respective regions by partitioning the electrode units when the electrode units are formed on the upper side and the lower side of the surface light source 200 so that a light emitting surface of the surface light source is controlled to have partially different brightness.

Voltages are differently applied to the respective regions of the horizontally and vertically partitioned electrode units so that partial regions a, b, and c of the light emitting surface of the surface light source can have various brightnesss.

The regional voltages transmitted to the multiple voltage applying units 270a and 270b are preferably controlled in association with a panel driving signal of the liquid crystal display. Thus, the surface light source or the backlight unit may further include an electrode data controller 275 to differently control the voltages to be applied by the multiple voltage applying units to the regions of the electrode units such that the voltages are applied to the respective regions of the electrode units in accordance with the control signal in association with a screen information of the liquid crystal display.

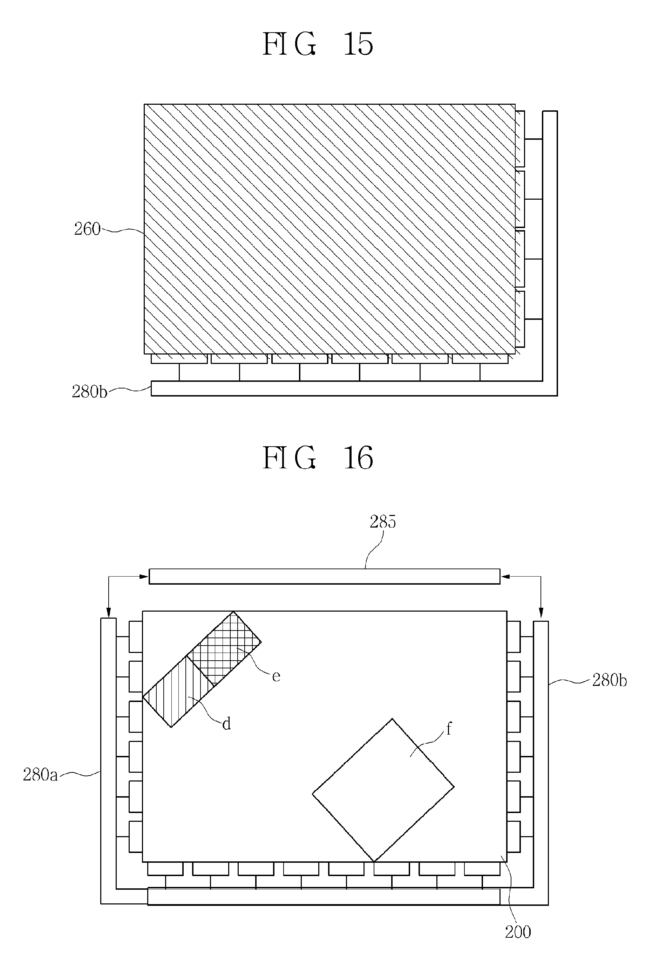

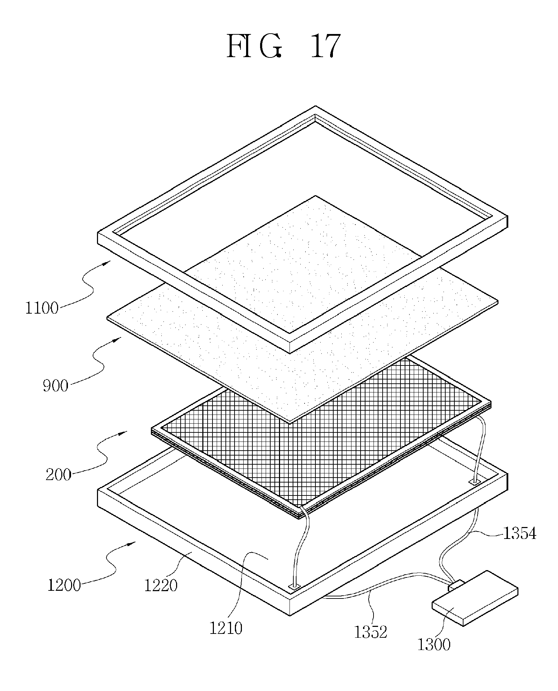

FIGS. 14 and 15 illustrate electrode patterns obliquely formed different from the electrode patterns of the previous embodiment of the present invention. As illustrated, the electrode units are partitioned into a plurality of regions and multiple voltage applying units 280a and 280b drive the respective regions. As a result, the light emitting surface of the surface light source, as illustrated in FIG. 16, may be configured such that partial regions d, e, and f have various brightnesss. If the brightness of the surface light source is partially controlled by an electrode data controller 285 in association with display information, more clear and natural high quality image can be provided.

FIG. 17 is an exploded perspective view illustrating a backlight unit including a very thin surface light source according to an embodiment of the present invention. As illustrated, the backlight unit includes a surface light source 200, upper and lower cases 1100 and 1200, an optical sheet 900, and an inverter 1300. The lower case 1200 includes a bottom 1210 to accommodate the surface light source 200 and a plurality of sidewalls 1220 extended from edges of the bottom 1210 to form an accommodating space. The surface light source 200 is accommodated in the accommodating space of the lower case 1200.

The inverter 1300 is disposed on the rear side of the lower case 1200 and generates a discharging voltage to drive the surface light source 200. The discharging voltage generated by the inverter 1300 is applied to the electrode units of the surface light source 200 through first and second power source lines 1352 and 1354. The optical sheet 900 may include a diffusion plate to uniformly diffuse a light beam emitted from the surface light source 200 and a prism sheet to collimate the diffused light beam. The upper case 1100 is coupled with the lower case 1200 to support the surface light source 200 and the optical sheet 900. The upper case 1100 prevents the surface light source 200 from being separated from the lower case 1200.

Different from as illustrated in the drawings, the upper case 1100 and the lower case 1200 may be integrally formed into a single case. On the other hand, the backlight unit according to the embodiment of the present invention may not include the optical sheet 900 because of excellent brightness and brightness uniformity of the surface light source.

According to the present invention, the plate type electrode unit formed on the surface of the light source body of the surface light source is partitioned into a plurality of regions and voltages are applied to the respective regions so that brightness property of partially controlling brightness can be obtained. Thus, a locally controlled dimming of a surface light source depending on screen information of the liquid crystal display is enabled so that a high quality image can be provided.

The invention has been described using preferred exemplary embodiments. However, it is to be understood that the scope of the invention is not limited to the disclosed embodiments. On the contrary, the scope of the invention is intended to include various modifications and alternative arrangements within the capabilities of persons skilled in the art using presently known or future technologies and equivalents. The scope of the claims, therefore, should be accorded the broadest interpretation so as to encompass all such modifications and similar arrangements.

## Claims

1. A surface light source comprising:
a plate type light source body having a sealed discharging space formed therein;
a plate type electrode unit entirely formed on at least one surface of the light source body; and
a multiple voltage applying unit to partition the electrode unit into a plurality of regions and to apply voltages to the respective regions.

2. The surface light source of claim 1, wherein the electrode unit comprises electrode patterns spaced apart from each other.

3. The surface light source of claim 1, wherein the electrode unit comprises:
a first surface electrode formed on an upper side of the light source body; and
a second surface electrode formed on a lower side of the light source body.

4. The surface light source of claim 3, wherein the first surface electrode and the second surface electrode comprise electrode patterns formed in different directions.

5. The surface light source of claim 1, wherein the light source body comprises:
a plate type first substrate;
a plate type second substrate facing the first substrate by a predetermined distance; and
a sealing member formed on edges between the first and second substrates to seal an inner space formed by the first and second substrates.

6. The surface light source of claim 5, further comprising at least one spacer inserted between the first and second substrates.

7. The surface light source of claim 1, wherein the electrode unit comprises:
a base layer;
an electrode pattern formed on an upper side of the base layer; and
a protective layer formed in the upper side of the electrode pattern.

8. The surface light source of claim 7, wherein the base layer and the protective layer have a property of transmitting visible rays therethrough.

9. The surface light source of claim 7, wherein the electrode pattern comprises a circular pattern, an oval pattern, a regular polygonal pattern, a net-structured pattern, or a stripe type pattern.

10. The surface light source of claim 7, wherein the electrode pattern is made of one selected from copper, silver, gold, aluminum, ITO, nickel, chrome, carbon-based conductive material, conductive polymer, and a mixture thereof.

11. The surface light source of claim 1, wherein the electrode unit has an open ratio of exposing the light source body equal to or higher than 60 %.

12. The surface light source of claim 1, wherein a mercury excluded discharging gas is injected into the light source body.

13. A driving method of a surface light source comprising:
forming a plate type electrode unit having a property of transmitting visible rays therethrough on a plate type light source body having a sealed discharging space; and
partitioning the electrode unit into a plurality of regions and applying voltages to the respective regions.

14. The driving method of a surface light source of claim 13, wherein the electrode unit comprises:
a first surface electrode formed on an upper side of the light source body; and
a second surface electrode formed on a lower side of the light source body; and
the first and second surface electrodes are partitioned into a plurality of regions and voltages are applied to the respective regions.

15. The driving method of a surface light source of claim 13, wherein the electrode unit applies voltages to the respective regions in accordance with a control signal in association with screen information of a liquid crystal display.

16. A backlight unit comprising:
a surface light source comprising:
a plate type light source body having a sealed discharging space formed therein;
a plate type electrode unit entirely formed on at least one surface of the light source body; and
a multiple voltage applying unit to partition the electrode unit into a plurality of regions and to apply voltages to the respective regions; and
a case to accommodate the surface light source; and
an inverter to apply voltages to first and second surface electrodes.

17. The backlight unit of claim 16, further comprising an electrode data controller to differently control voltages applied to the respective regions by the multiple voltage applying unit.
